# EUROPÄISCHE PATENTSCHRIFT

(11) **EP 3 444 153 B1**
(45) Veröffentlichungstag und Bekanntmachung des Hinweises auf die Patenterteilung: **08.07.2020**
(21) Anmeldenummer: 18187660.8
(22) Anmeldetag: 07.08.2018
(51) Int. Cl.: B60T 1/06, B60B 27/00, B60B 35/12, F16D 55/24, F16D 13/64, F16D 13/69, F16D 25/0638

(54) **RADSATZGETRIEBE**
WHEEL SET GEARBOX
ENTRAÎNEMENT D'ESSIEU MONTÉ

(30) Priorität: 17.08.2017 DE 102017214335
(43) Veröffentlichungstag der Anmeldung: 20.02.2019
(73) Patentinhaber: Robert Bosch GmbH, 70442 Stuttgart (DE)
(72) Erfinder: Bronheim, Dietmar, 58452 Witten (DE); Schmeink, Markus, 44263 Dortmund (DE)

(56) Entgegenhaltungen:
- EP-A2- 0 945 636
- EP-A2- 1 167 140
- EP-B1- 1 639 268
- WO-A1-2007/055620
- WO-A1-2014/090267
- DE-A1-102012 001 376
- DE-A1-102014 208 769
- DE-B3-102010 026 399

## Beschreibung

### Gebiet der Erfindung

Die Erfindung betrifft ein Radsatzgetriebe gemäß dem Oberbegriff des Patentanspruchs 1.

### Hintergrund der Erfindung

Radsatzgetriebe mit integrierten Bremsen haben einen Kolben, durch den eine Bremse betätigbar ist. Dieser wird nach einem Bremsvorgang mittels einer Druckfeder, welche in einer Gehäusestruktur oder einer Tragachse angeordnet ist, wieder in Ausgangslage zurückgedrückt, so dass ein Lamellenpaket der Bremse wieder entspannt wird. Der Kolben kann mechanisch und/oder hydraulisch betätigbar sein. Die Federn werden in Bohrungen in einer Gehäusestruktur oder Tragachse montiert. Dadurch ist eine komplexe Bauweise und aufwändige Montage des Gehäuses und/oder des Radsatzgetriebes nötig.

Die Druckschrift DE 10 2012 001376 A1 offenbart eine Bremsanordnung mit einem Lamellenpaket, welches über einen Kolben zum Bremsen zusammenpressbar ist und antriebsseitig innerhalb eines Planetengetriebes angeordnet ist, wobei der Kolben mindestens eine Bohrung zum Aufnehmen einer Druckfeder aufweist.

Die Druckschrift EP 1167 140 A2 offenbart einen Radantrieb mit einer drehfest an einem Fahrzeugrahmen angebrachten Tragachse, die mit einem Hohlrad verbunden ist, welches durch ein Planetengetriebe angetrieben ist, und mit einer integrierten Betriebsbremse, welche innerhalb des Hohlrades und außenradial auf einem Endstück der Tragachse angeordnet ist und wobei das Planetengetriebe stirnseitig hinter der Betriebsbremse innerhalb des Hohlrads angeordnet ist.

Das Dokument EP 1 1639 268 B1 offenbart eine Bremsenanordnung mit einem Lamellenpaket, welches über eine Kolbenanordnung zusammenpressbar ist, wobei ein erster Hydraulikkreis zur Betriebsbremsung auf die Kolbenanordnung einwirkt und ein zweiter Hydraulikkreis zur Parkbremsung auf die Kolbenanordnung einwirkt, welche einen mit dem Lamellenpaket in Kontakt stehenden und vom ersten Hydraulikkreis beaufschlagten Betriebsbremskolben umfasst, der wiederum von einem benachbarten und mit dem zweiten Hydraulikkreis zusammenwirkenden separaten Parkbremskolben beaufschlagbar ist, der ringförmig ausgebildet ist und koaxial zum ebenfalls ringförmig ausgebildeten Betriebsbremskolben angeordnet ist, wobei der Parkbremskolben auf dem Außenumfang des Betriebsbremskolbens angeordnet ist und in Axialrichtung des Lamellenpakets an einem außenradialen Absatz des Betriebsbremskolbens zur Anlage kommt, um die Parkbremskraft auf den Betriebsbremskolben zu übertragen.

In dem Dokument DE 10 2014 208 769 A1 ist eine Lamellenkupplung offenbart, wobei zwischen zwei benachbarten Lamellen von Lamellensätzen eine Wellfeder vorgesehen ist.

### Offenbarung der Erfindung

Demgegenüber liegt der Erfindung die Aufgabe zugrunde, ein Radsatzgetriebe zu schaffen, der vorrichtungstechnisch einfach und kostengünstig herstellbar und einfach ausgestaltet ist.

Diese Aufgabe wird gelöst hinsichtlich eines Radsatzgetriebes gemäß den Merkmalen des Patentanspruchs 1.

Vorteilhafte Weiterbildungen der Erfindung sind Gegenstand der Unteransprüche.

Erfindungsgemäß ist ein Radsatzgetriebe vorgesehen, das eine Radaufnahme oder Tragachse und ein Planetengetriebe und eine Hydromaschine aufweist. Das Planetengetriebe kann mit einer Triebwelle verbunden sein, die wiederum mit einer Triebwelle der Hydromaschine, beispielsweise einem schnelllaufenden Hydraulikmotor, in Drehverbindung steht oder eine Triebwelle der Hydromaschine bildet. Die Verbindung der Triebwelle mit der Antriebswelle kann beispielsweise mittels einer Kerbzahnverbindung ausgebildet sein. Im Radsatzgetriebe kann ein Lamellenpaket vorgesehen sein, welches die Triebwelle radial umgreift. In dem Lamellenpaket können, insbesondere wechselweise, Außen- und Innenlamellen vorgesehen sein. Die Innenlamellen können dabei drehfest auf der Triebwelle angeordnet sein, die Außenlamellen können drehfest an einer Gehäusestruktur oder der Tragachse angeordnet sein. Des Weiteren kann zumindest ein Bremskolben vorgesehen sein, über den das Lamellenpaket axial zur Triebwelle zusammendrückbar sein kann, was zu Reibung zwischen den Lamellen und damit zu einem Bremseffekt führt. Zwischen den Lamellen, insbesondere jeweils zwischen zwei Außenlamellen, können sich vorteilhafterweise, die Triebwelle umgreifend, Wellenringe abstützen.

Diese Lösung hat den Vorteil, dass der Kolben durch die Wellenringe nach einem Bremsvorgang wieder in Ausgangslage zurückgeführt werden kann. Durch die Wellenringe kann zudem sichergestellt sein, dass die Lamellen im Nicht-Bremszustand voneinander sicher beabstandet sind. Dadurch können vorzugsweise Schleppverluste durch Reibung der Lamellen untereinander verringert werden. Zusätzlich sind die Wellenringe einfach zu montieren und es bedarf keiner speziellen Bohrungen in einer Gehäusestruktur oder einer Tragachse, die beispielsweise an einem Fahrzeug montiert ist, wie es aus dem Stand der Technik der Fall ist. Dadurch kann vorzugsweise die Herstellung kostengünstiger erfolgen. Zusätzlich kann eine Festigkeit des Gehäuses, oder der Tragachse erhöht werden, da keine zusätzlichen Bohrungen, wie im Stand der Technik, für die Federn vorgesehen sind. Der Abschnitt, in dem im Stand der Technik die Feder montiert ist, kann ausgespart werden, wodurch die Gehäusestruktur vorrichtungstechnisch einfacher ausgestaltet sein kann und kostengünstiger herstellbar, da weniger Bohrungen vorgesehen sind. Zudem kann ein Ölfluss im Gehäuse ohne weitere Bohrungen verbessert werden, da in dem Abschnitt kein Material mehr vorhanden ist.

Ein Wellenring kann jeweils eine Innenlamelle umgreifen und sich vorteilhafterweise zwischen jeweils zwei Außenlamellen abstützen. Dadurch können, wie bereits erwähnt, die Federn nach einem Bremsvorgang beabstandet voneinander gehalten werden, wodurch Schleppverluste durch Reibung der Lamellen verhindert werden. Mit Vorteil ist dann, in nicht zusammengedrücktem Zustand des Lamellenpakets, zwischen den Lamellen, also jeweils zwischen den Außen- und Innenlamellen, ein Luftspiel vorgesehen. Der Abstand der Lamellen zueinander kann beispielsweise etwa 0,2 mm betragen. Dadurch kann das Lamellenpaket in nicht zusammengedrücktem Zustand definiert belüftet sein.

Das Lamellenpaket kann sich beispielsweise an einem Radialbund abstützen, der, wie das Lamellenpaket, umlaufend um die Triebwelle angeordnet ist. Der Kolben kann also das Lamellenpaket, in einer axialen Richtung der Triebwelle aus gesehen, gegen den Radialbund pressen. Durch eine Entspannung der Wellenringe kann der Kolben vorteilhafterweise nach einem Bremsvorgang wieder in seine Ausgangslage zurückgeführt werden.

Die Innenlamellen können vorzugsweise mittels Steckzahnverbindungen drehfest auf der Triebwelle des Radsatzgetriebes montiert sein, die Außenlamellen ebenfalls über Steckzahnverbindungen drehfest an der Gehäusestruktur. Steckzahnverbindungen sind vorrichtungstechnisch einfach herstellbar und kostengünstig montierbar. Durch die drehfeste Montage der jeweiligen Lamellen kann vorzugsweise, während eines Bremsvorgangs, also dem Zusammendrücken des Lamellenpakets, eine Reibung erzeugt werden, indem die Innenlamellen gegen die Außenlamellen gedrückt werden. Das führt zu dem gewünschten Bremseffekt.

Bevorzugt können die Wellenringe jeweils wellenartig ausgestaltet sein. Es kann sich also beispielweise um Wellenfedern handeln. Die Wellenringe können beispielsweise eine Öffnung wie bei einem Sprengring aufweisen. Das hat den Vorteil, dass in den Wellenringen beim axialen Zusammenpressen keine zu hohen Kräfte in Umfangrichtung wirken und es zu Schäden und/oder Deformation kommt. Zudem sind Wellenfedern kostengünstig in der Anschaffung und vorrichtungstechnisch einfach montierbar.
Die Wellenfedern können auch als geschlossener Ring ausgestaltet sein. Dadurch kann eine geringere Aufweitung der Wellenfedern erreicht werden.

Bevorzugt können die Wellenringe so ausgestaltet sein, dass jeweils zwischen zwei benachbarten Außenlamellen ein Wellenring vorgesehen ist. Dadurch können die Lamellen bei einer Entlastung der Bremse beabstandet gehalten werden, was zu einer Reduktion von Schleppverlusten führt, wie bereits obenstehend erläutert. Vorteilhafterweise kann dadurch ein Wirkungsgrad des Getriebes gesteigert werden. Derartige Wellenringe wiesen somit einen vergleichsweise großen Durchmesser auf, wodurch sie robuster ausgestaltet werden können.

In einer weiteren Ausgestaltung der Erfindung ist je ein Wellenring zusätzlich oder alternativ zwischen zwei benachbarten Innenlamellen angeordnet. Dadurch können vorteilhafterweise kleinere, bauraumsparende Wellenringe verwendet sein, welche kostengünstiger sind.

Es ist auch möglich, dass jeweils zwischen zwei Außenlamellen und zwei Innenlamellen Wellenringe vorgesehen sind. Dadurch kann vorteilhafterweise eine höhere Federkraft erreicht werden.

Der Kolben, durch den das Lamellenpaket zusammendrückbar ist, kann vorzugsweise hydraulisch und/oder mechanisch betätigbar sein. So kann der Kolben beispielsweise während eines Bremsvorgangs hydraulisch betätigbar sein, und während eines Parkvorgangs mechanisch arretiert sein, so dass das Lamellenpaket zusammengedrückt ist, und somit ein Bremseffekt auftritt. Die mechanische Bewegung des Kolbens kann bevorzugt über einen zusätzlichen Bremskolben erfolgen.

Die Wellenringe oder Federringe können bevorzugt aus Draht oder Blechstreifen hergestellt sein. Dadurch sind sie mit Vorteil kostengünstig herstellbar oder beschaffbar und einfach montierbar.

Der Begriff "etwa" kann beispielsweise bedeuten, dass eine Abweichung in den fachüblichen Toleranzen oder von bis zu 5% vorhanden sein kann.

### Kurze Beschreibung der Zeichnungen

Ein bevorzugtes Ausführungsbeispiel der Erfindung wird im Folgenden anhand schematischer Zeichnungen näher erläutert. Es zeigen:
Figur 1 in einem perspektivischen Längsschnitt ein Radsatzgetriebe,
Figur 2 in einem Längsschnitt einen Ausschnitt im Bereich eines Lamellenpaket des Radsatzgetriebes aus Figur 1 und
Figur 3 unterschiedliche Ausführungsformen eines Federelements.

### Detaillierte Beschreibung der bevorzugten Ausführungsformen

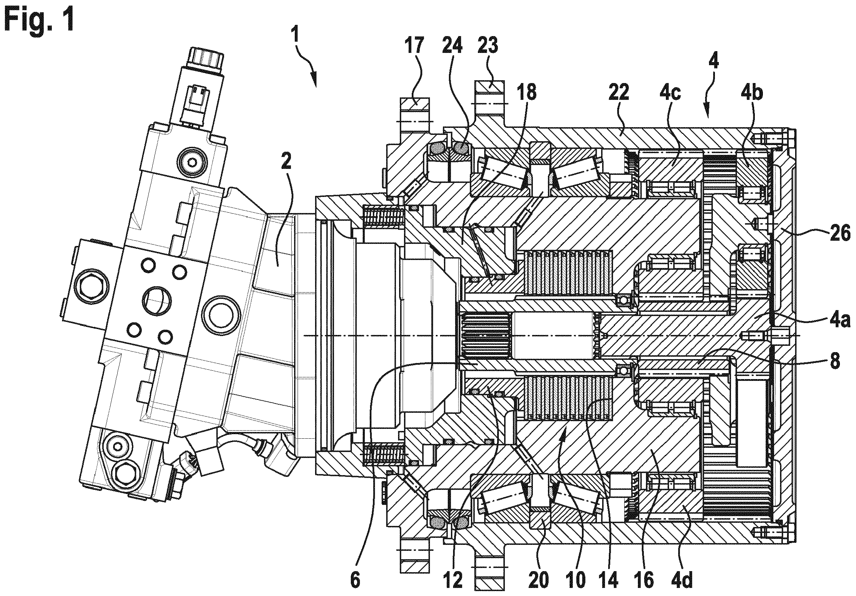

Gemäß Figur 1 ist ein Radsatzgetriebe 1 dargestellt. Dieser hat eine Hydromaschine 2, die als schnelllaufender Hydraulikmotor ausgestaltet ist, und ein zweistufiges Planetengetriebe 4. Die Hydromaschine 2 kann bei Bedarf auch als Hydropumpe eingesetzt werden. Das Planetengetriebe 4 weist ein Sonnenrad 4a und zumindest ein Planetenrad 4b auf, die eine erste Stufe bilden, und zwei Planetenräder 4c und 4d, die eine zweite Stufe bilden. Der Hydraulikmotor 2 ist mittels einer Antriebswelle 6 drehfest mit einer Innenwelle 8 des Planetengetriebes 4 verbunden. Die Innenwelle 8 umgreift drehfest eine Triebwelle des Sonnenrades 4a des Planetengetriebes 4. Umfangsseitig um die Antriebswelle 6 ist ein Lamellenpaket 10 vorgesehen, welches durch einen Kolben 12 zusammendrückbar ist. Der Kolben 12 in Längsrichtung der Antriebswelle 6 ist etwa hülsenförmig um die Antriebswelle 6 ausgebildet und hydraulisch und/oder mechanisch betätigbar. Der Kolben 12 ist so ausgebildet, dass er das Lamellenpaket 10 beim Bremsen in Richtung weg von dem Hydraulikmotor 2 gegen einen Radialbund 14 drückt. Der Radialbund 14 ist an einer Gehäusestruktur 16 vorgesehen, die etwa hülsenförmig das Lamellenpaket 10, den Kolben 12 und einen Parkbremskolben 18 umgreift. Der Parkbremskolben 18 kann den Kolben 12 mechanisch gegen den Radialbund 14 gedrückt halten, beispielsweise für einen Parkzustand. Die Gehäusestruktur 16 weißt in Richtung zu dem Hydraulikmotor 2 einen Flansch 17 auf, der beispielsweise an einem Fahrzeug (nicht gezeigt) befestig ist. Ein Hohlrad 22, an welchem die Planetenräder 4b,c,d des Planetengetriebes 4 anliegen, liegt über eine Lageranordnung 20an der Gehäusestruktur 16 an. Die Lageranordnung 20 ist als eine Wälzlageranordnung ausgebildet. Am Hohlrad 22 kann beispielsweise über einen Flansch 23 ein Rad eines Fahrzeugs (nicht gezeigt) befestigt sein. Zwischen dem Hohlrad 22 und der Gehäusestruktur 16 ist eine Dichtung 24 vorgese3hen, um ein Abdichten auf der Seite der Hydromaschine 2 zu ermöglichen. Auf einer Seite von dem Hydraulikmotor 2 wegweisend, hat das Radsatzgetriebe 1 eine Abdeckung 26, die das Hohlrad 22 an einer Stirnseite abschließt.

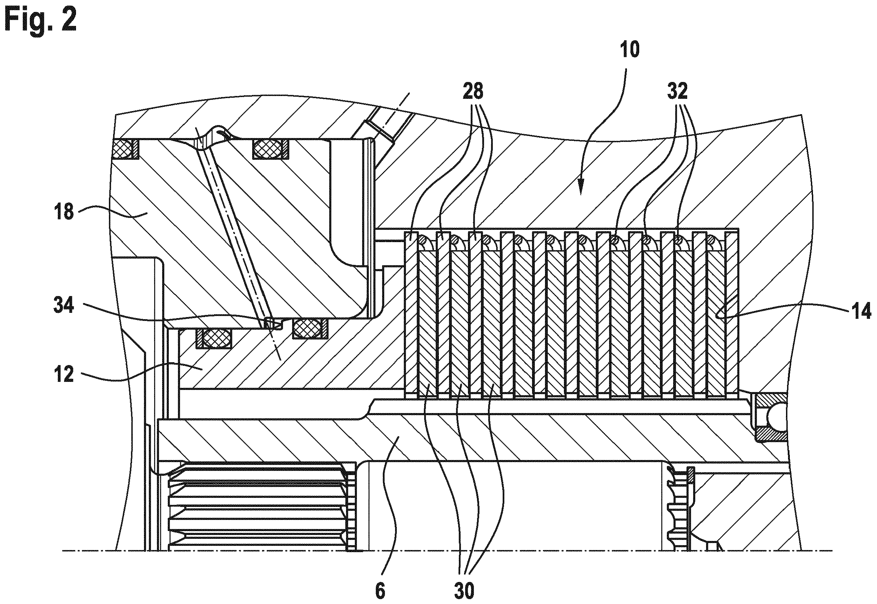

Gemäß Figur 2 ist das Lamellenpaket 10, der Kolben 6, der Bremskolben 18 und die Antriebswelle 6 gezeigt. Das Lamellenpaket 10 weist Außenlamellen 28 und Innenlamellen 30 auf. Jeweils zwischen zwei Außenlamellen 28 ist ein Federelement 32 angeordnet, welches als Ringelement oder Ringfeder ausgestaltet ist und sich an jeweils zwei Außenlamellen 28 abstützt. Die Federelemente 32 umgreifen die Antriebswelle 6, sowie das um die Antriebswelle 6 angeordnete Lamellenpaket 10. Das Lamellenpaket 10 ist durch den Kolben 6 gegen den Anschlag 14 zusammendrückbar. Der Kolben 6 hat eine Fläche 34, die mit einem Druckmittel beaufschlagbar ist, zur hydraulischen Betätigung des Kolbens 6. Zusätzlich ist der Kolben 6 durch den Bremskolben 18 mechanisch bewegbar, so dass das Lamellenpaket 10 gegen den Radialbund 14 zusammendrückbar ist. Die Federelemente 32 stützen sich an jeweils zwei Außenlamellen 28 ab und halten diese so voneinander beabstandet.

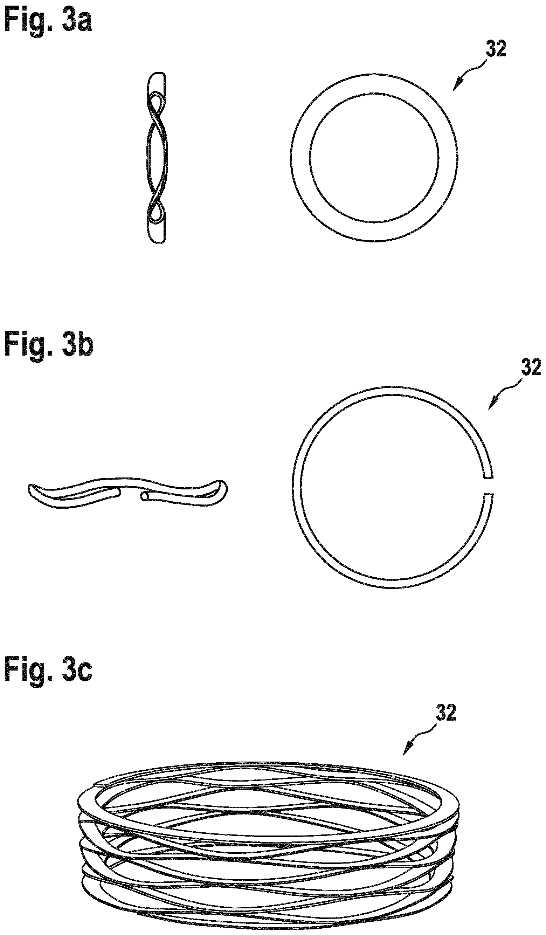

Figur 3a zeigt eine mögliche Ausführungsform eines Federelements 32. Dabei ist das Federelement 32 als geschlossener Wellenring mit einem rechteckförmigen Querschnitt ausgestaltet.

Figur 3b zeigt eine weitere mögliche Ausführungsform eines Federelements 32. Dieses ist als offener Wellenring mit einem runden Querschnitt ausgestaltet.

Figur 3c zeigt ein Federelement 32, das als Federpaket ausgestaltet ist, welches aus mehreren flachen Wellenringen hergestellt ist, welche, beispielsweise mittel einem Scheiß- oder Lötverfahren miteinander verbunden sind.

Offenbart ist ein Radsatzgetriebe mit einem Lamellenpaket, das Außen- und Innenlamellen aufweist, und mit einem Kolben der das Lamellenpaket zusammendrücken kann, wobei zwischen jeweils zwei Lamellen Wellenringe vorgesehen sind, die eine Triebwelle einer Hydraulikmaschine des Radsatzgetriebes umgreifen.

## Patentansprüche

1. Radsatzgetriebe mit einer Radaufnahme, die über ein Planetengetriebe (4) mit einer Triebwelle (6) verbunden ist, die wiederum mit einer Hydromaschine (2) in Drehverbindung ist, wobei ein Lamellenpaket (10) vorgesehen ist, das wechselweise Außen- und Innenlamellen (28, 30) aufweist, wobei die Innenlamellen (30) drehfest auf der Triebwelle (6) angeordnet sind und die Außenlamellen (28) drehfest mit einer Gehäusestruktur (16) verbunden sind, und mit zumindest einem Bremskolben (18), über den das Lamellenpaket (10) zusammendrückbar ist, **dadurch gekennzeichnet, dass** zwischen den Lamellen (28, 30) die Triebwelle umgreifende Wellenringe (32) angeordnet sind, die Lamellen (28, 30) des Lamellenpakets (10) in unbetätigtem Zustand auseinander drücken und zudem einen Rückhub des Bremskolbens (18) bewirken.

2. Radsatzgetriebe nach dem Anspruch 1, wobei zumindest ein Wellenring (32) oder ein Teil der Wellenringe (32) oder alle Wellenringe (32) jeweils eine Innenlamelle (30) umgreift/umgreifen.

3. Radsatzgetriebe nach einem der Ansprüche 1 oder 2, wobei sich zumindest ein Wellenring (32) oder ein Teil der Wellenringe (32) oder alle Wellenringe (32) zwischen jeweils zwei Außenlamellen (28) abstützt/abstützen.

4. Radsatzgetriebe nach einem der Ansprüche 1 bis 3, wobei sich das Lamellenpaket (10) in einer axialen Richtung an der Gehäusestruktur (16) und in entgegengesetzter Richtung am Bremskolben (18) abstützt.

5. Radsatzgetriebe nach einem der Ansprüche 1 bis 4, wobei die Innenlamellen (30) über Kerbzahnverbindungen mit der Triebwelle (6) und die Außenlamellen (30) über Kerbzahnverbindungen mit der Gehäusestruktur (16) verbunden sind.

6. Radsatzgetriebe nach einem der Ansprüche 1 bis 5, wobei jeweils zwischen zwei benachbarten Außenlamellen (28) jeweils ein Wellenring (32) vorgesehen ist.

7. Radsatzgetriebe nach einem der Ansprüche 1 bis 6, wobei jeweils zwischen zwei benachbarten Innenlamellen (30) jeweils ein Wellenring (32) vorgesehen ist.

8. Radsatzgetriebe nach einem der Ansprüche 1 bis 7, wobei der zumindest eine Kolben (18) mechanisch und/oder hydraulisch betätigbar ist.

9. Radsatzgetriebe nach einem der Ansprüche 1 bis 8, wobei die Wellenringe (32) aus einem Draht oder Blechstreifen hergestellt sind.

## Claims

1. Wheelset transmission with a wheel receptacle which is connected via a planetary transmission (4) to a drive shaft (6) which is in turn in a rotary connection with a hydraulic machine (2), a multiple disc assembly (10) being provided which has outer and inner discs (28, 30) in an alternating manner, the inner discs (30) being arranged fixedly on the drive shaft (6) so as to rotate with it, and the outer discs (28) being connected fixedly to a housing structure (16) so as to rotate with it, and with at least one brake piston (18), via which the multiple disc assembly (10) can be pressed together, **characterized in that** shaft rings (32) which engage around the drive shaft are arranged between the discs (28, 30), press the discs (28, 30) of the multiple disc assembly (10) apart from one another in the non-actuated state, and additionally bring about a return stroke of the brake piston (18).

2. Wheelset transmission according to Claim 1, at least one shaft ring (32) or part of the shaft rings (32) or all the shaft rings (32) in each case engaging around an inner disc (30).

3. Wheelset transmission according to either of Claims 1 and 2, at least one shaft ring (32) or part of the shaft rings (32) or all the shaft rings (32) being supported between in each case two outer discs (28).

4. Wheelset transmission according to one of Claims 1 to 3, the multiple disc assembly (10) being supported in one axial direction on the housing structure (16) and in the opposite direction on the brake piston (18).

5. Wheelset transmission according to one of Claims 1 to 4, the inner discs (30) being connected via serrated tooth connections to the drive shaft (6), and the outer discs (30) being connected via serrated tooth connections to the housing structure (16).

6. Wheelset transmission according to one of Claims 1 to 5, in each case one shaft ring (32) being provided in each case between two adjacent outer discs (28).

7. Wheelset transmission according to one of Claims 1 to 6, in each case one shaft ring (32) being provided in each case between two adjacent inner discs (30).

8. Wheelset transmission according to one of Claims 1 to 7, it being possible for the at least one piston (18) to be actuated mechanically and/or hydraulically.

9. Wheelset transmission according to one of Claims 1 to 8, the shaft rings (32) being manufactured from a wire or sheet metal strip.

## Revendications

1. Réducteur d'essieu monté, comprenant un logement de roue qui est raccordé par le biais d'un engrenage planétaire (4) à un arbre d'entraînement (6) qui est à son tour raccordé de manière rotative à une machine hydraulique (2), un paquet de lamelles (10) étant prévu, lequel présente une alternance de lamelles extérieures et de lamelles intérieures (28, 30), les lamelles intérieures (30) étant disposées de manière solidaire en rotation sur l'arbre d'entraînement (6) et les lamelles extérieures (28) étant connectées de manière solidaire en rotation à une structure de boîtier (16), et comprenant au moins un piston de frein (18) par le biais duquel le paquet de lamelles (10) peut être comprimé, **caractérisé en ce qu'**entre les lamelles (28, 30) sont disposées des bagues ondulées (32) venant en prise autour de l'arbre d'entraînement, qui, dans l'état non actionné, repoussent les unes des autres les lamelles (28, 30) du paquet de lamelles (10) et provoquent en outre une course de retour du piston de frein (18).

2. Réducteur d'essieu monté selon la revendication 1, dans lequel au moins une bague ondulée (32) ou une partie des bagues ondulées (32) ou toutes les bagues ondulées (32) vient ou viennent en prise à chaque fois autour d'une lamelle intérieure (30).

3. Réducteur d'essieu monté selon l'une quelconque des revendications 1 et 2, dans lequel au moins une bague ondulée (32) ou une partie des bagues ondulées (32) ou toutes les bagues ondulées (32) s'appuie ou s'appuient entre à chaque fois deux lamelles extérieures (28).

4. Réducteur d'essieu monté selon l'une quelconque des revendications 1 à 3, dans lequel le paquet de lamelles (10) s'appuie dans une direction axiale contre la structure de boîtier (16), et dans la direction opposée, contre le piston de frein (18).

5. Réducteur d'essieu monté selon l'une quelconque des revendications 1 à 4, dans lequel les lamelles intérieures (30) sont connectées par le biais de liaisons à dentelures à l'arbre d'entraînement (6) et les lamelles extérieures (30) sont connectées par le biais de liaisons à dentelures à la structure de boîtier (16).

6. Réducteur d'essieu monté selon l'une quelconque des revendications 1 à 5, dans lequel à chaque fois entre deux lamelles extérieures adjacentes (28) est prévue à chaque fois une bague ondulée (32).

7. Réducteur d'essieu monté selon l'une quelconque des revendications 1 à 6, dans lequel à chaque fois entre deux lamelles intérieures adjacentes (30) est prévue à chaque fois une bague ondulée (32).

8. Réducteur d'essieu monté selon l'une quelconque des revendications 1 à 7, dans lequel l'au moins un piston (18) peut être actionné mécaniquement et/ou hydrauliquement.

9. Réducteur d'essieu monté selon l'une quelconque des revendications 1 à 8, dans lequel les bagues ondulées (32) sont fabriquées à partir d'un fil métallique ou d'un ruban de tôle.
